# EUROPEAN PATENT SPECIFICATION

(11) **EP 1 610 052 B1**
(45) Date of publication and mention of the grant of the patent: **18.04.2012**
(21) Application number: 05253094.6
(22) Date of filing: 19.05.2005
(51) Int. Cl.: F17C 5/00, F17C 1/14

(54) **Vessel and method of sealing a vessel for a highly pressurized combustion-supportable or flammable gas**
Behälter für hochverdichtetes verbrennungsförderndes oder brennbares Gas und Verfahren zur Behälterabdichtung
Réservoir â gaz haute-pression combustible ou comburant et méthode de fermeture étanche de ce réservoir

(30) Priority: 20.05.2004 JP 2004149881
(43) Date of publication of application: 28.12.2005
(73) Proprietor: Nippon Tansan Gas Co., Ltd., Adachi-ku Tokyo (JP)
(72) Inventor: Sato, Masao, Koshigaya-shi Saitama (JP); Miyake, Masayoshi, Saitama-shi Saitama (JP); Yazaki, Ryuichi, Iwatsuki-shi Saitama (JP)
(74) Representative: Smith, Norman Ian

(56) References cited:
- EP-A1- 1 503 134
- CH-A- 164 193
- DE-A1- 19 645 455
- GB-A- 281 199
- US-A- 1 903 630
- US-A- 5 713 342
- US-B1- 6 378 570

## Description

### BACKGROUND OF THE INVENTION

### 1. Technical Field of the Invention.

This invention relates to a vessel and a method of sealing a vessel for a combustion-supportable gas, such as oxygen, nitrous oxide and so on, a flammable gas, such as LPG, hydrogen and so on, or a mixture of these gases in a highly pressurized condition.

### 2. Prior art

In the production of mini gas cartridges charged with a combustion-supportable or flammable gas, a sealing plate cannot be welded to the cartridge because these gases easily cause explosions. Therefore, vessels charged with a combustion-supportable or flammable gas have to be sealed by a method such as caulking and so on. However, because it is difficult to obtain a good sealing condition using methods other than welding, these methods have some problems in safety or economy in cases where they are applied to goods that are required to maintain pressure and amount of a stored gas for a long period without disaster.

Therefore, the applicant has proposed a method (the first prior art) disclosed in Japanese Utility publication H03-032299 to improve the sealing condition of a vessel sealed by methods such as caulking and so on. According to this method, the sealing condition of a vessel is improved by use of a welding cap over a sealed portion of the vessel charged with a gas.

Also the applicant has proposed a sealing method, a sealing apparatus and a mechanism using a charge mouth (the second prior art) disclosed in Japanese Patent application 2002-364524 (Japanese Patent publication 2004-197783) to enable welding of a sealing plate on a vessel charged with a highly pressurized combustion-supportable or a flammable gas.

EP 1503134 describes filling a container with a pressurized gas and sealing the container in an enclosed space. The container is sealed by driving a metal ball into an inlet duct of the container.

Closest prior art US 5713342 describes a capsule with a single aperture which is sealed by a resilient internal plug.

US 1903630 describes a drawn cylinder with a boss at one end for receiving a standard valve, with the other end being open its full diameter.

### SUMMARY

However, according to the first prior art, there is a problem that the vessel is not able to be easily opened for use because its dual sealing mechanism requires so strong a force to be applied by a user's own hands that a large apparatus is needed to open it.

Further, according to the second prior art, there is a problem that an interlock system, which is provided to prevent explosion or other accidents, tends to be complex and to increase the cost of maintaining safe operation and maintaining the apparatus.

Therefore, the present applicant proposes a vessel and a method of sealing a vessel for a highly pressurized combustion-supportable or flammable gas, whereby the vessel to be charged with the highly pressurized combustion-supportable or flammable gas can be sealed without a complex interlock system, and has a sealing portion that reliably maintains a sealing condition and is easily opened for use.

According to a first aspect of the present invention there is provided a method of sealing a vessel for a highly pressurized combustion-supportable or flammable gas as claimed in claim 1.

In the vessel, the discharge mouth may be sealed by a safety sealing plate welded thereon.

In the method or the vessel, the sealed charge mouth may be covered air tightly with a secondary sealing means.

In the method or the vessel, the secondary sealing means may comprise an annular wall portion and a sealing plate, which annular wall portion encircles the charge mouth and which sealing plate is soldered onto a top plane of the annular wall portion.

In the method or the vessel, the secondary sealing means may comprise an annular wall portion and a sealing plate, which annular wall portion encircles said charge mouth and which sealing plate is welded onto a top plane of the annular wall portion.

In the method or the vessel, the secondary sealing means may comprise an annular wall portion and a threaded plug, which annular wall portion encircles the charge mouth and which threaded plug is screwed to an inner face of the annular wall portion.

In the method or the vessel, the secondary sealing means may comprise an annular wall portion and a coupling cap nut, which annular wall portion encircles the charge mouth and which coupling cap nut is screwed to an outer face of the annular wall portion.

### BRIEF DESCRIPTION OF THE DRAWINGS

An embodiment of the present invention will be described now, by way of example only, with reference to the accompanying drawings in which:-
Fig. 1(a), (b) and (c) are drawings that show a charging apparatus and a vessel which vessel is located in a charging apparatus to implement the sealing method. Fig. 1(a) is a front section and shows a general view of the apparatus.
Fig. 1(b) is an enlarged front section and shows the condition of the charge mouth before sealing. Fig.1(c) is an enlarged front section that shows the condition of the charge mouth just after sealing.
Fig. 2(a), (b) and (c) are drawings that show a second charging apparatus and a vessel which vessel is located in the charging apparatus. Fig.2(a) is a front section that shows a general view of the apparatus. Fig.2(b) is an enlarged front section that shows the condition of the charge mouth before air tight covering. Fig.2(c) is an enlarged front section that shows the condition of the charge mouth just after air tight covering.
Figs.3(a) and (b) are drawings that show an enlarged view of a third charge mouth sealed by the metal pipe. Fig.3(a) is a front section that shows the condition of the charge mouth before sealing. Fig.3(b) is a front section that shows the condition of the charge mouth just after sealing.

### DETAILED DESCRIPTION OF THE PREFERRED EMBODIMENT

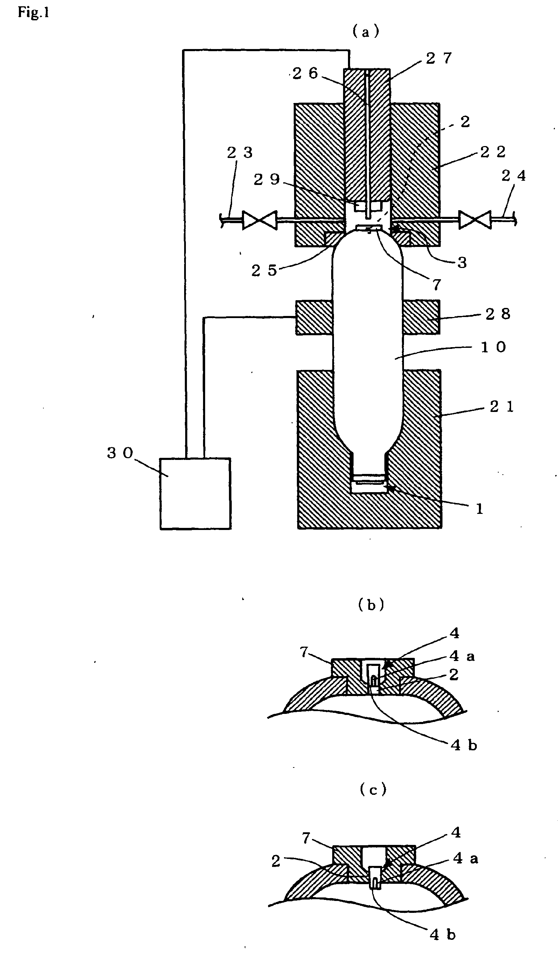

The charging apparatus shown in figure 1 is for charging oxygen gas into a vessel 10 at predetermined pressure (19.2MPa) and has a vessel receiver 21 and a support member 22. The support member 22 is arranged to move toward and away from the vessel receiver 21 and has an inner space 3 which is so shaped and arranged so that a top end portion of the vessel 10 can be stably supported by the vessel receiver 21 in an airtight condition. The space 3 is provided with an exhaust passage 23 and an oxygen injection passage 24. The passage 23 is arranged to be opened or closed according to situation and is connected to a vacuum pump (not shown). The passage 24 is arranged to be opened or closed according to situation and is connected to an oxygen supplying means (not shown), whereby pressure and property of gas in the inner space 3 can be adjusted. Further, a sealing packing 25 is provided on a contacting portion where the vessel 10 contacts the supporting member 22, and the space 3 is shaped to maintain an airtight condition when the supporting member 22 is pressed onto the top end portion of the vessel 10.

As the vessel 10 is to be charged with oxygen gas and sealed by using this apparatus, the vessel has a discharge mouth 1 and a charge mouth 2 for highly pressurized oxygen gas. The discharge mouth 1 is previously sealed in such a way that it can be opened.

To charge the oxygen gas, the vessel 10 is positioned with the charge mouth 2 facing the supporting member 22 and is located on the vessel receiver 21. The supporting member 22 is pressed onto the vessel 10 and at this stage both the drawing passage 23 and the oxygen injection passage 24 are closed. The charge mouth 2 is surrounded by space 3 which is sealed in an airtight manner. Next, the drawing passage 23 is opened, and the space 3 and the inside of the vessel 10 are evacuated. The drawing passage 23 is closed again. Then the injection passage 24 is opened and highly pressurized oxygen gas is charged into the space 3 and the inside of the vessel 10. When the pressure inside the space 3 and the vessel 10 reaches a predetermined value, the vessel 10 is in the condition where it is charged with the pressurized oxygen gas at predetermined pressure.

After completion of the charging process, the charge mouth 2 is sealed to form a vessel 10 charged with the highly pressurized oxygen gas.

According to this method, the charge mouth 2 does not have to be sealed so that it is openable as long as the discharge mouth 1 is sealed in an openable state. This results from the vessel having both the discharge mouth 1 and the charge mouth 2. Namely, the charge mouth 2 does not have to be sealed by a sealing plate, and many other kinds of sealing techniques can be used to seal the mouth 2. Therefore, by selecting proper techniques to obtain a good sealing condition which techniques can be carried out in the space 3 under the oxygen gas atmosphere, it is possible to seal the vessel 10 charged with the highly pressurized oxygen gas without the need for a complex interlock system and in such a way that it is possible to maintain a well sealed condition after sealing. Furthermore, regarding to the discharge mouth 1, because it is independent from the charge mouth 2 and is sealed separately without limitation of the conditions under which the sealing operation is carried out, by selecting appropriate sealing techniques, it is relatively easy to seal the discharge mouth in an openable state and in such a way that a well sealed condition can be maintained after sealing.

To seal the charge mouth 2, a metal pin 4 in the form of a truncated cone having a groove 4a extending on a side plane to a smaller top plane 4b is applied. The supporting member 22 is provided with a push bar 26 which is arranged to move toward and away from the vessel 10 and exert a pushing force onto the metal pin 4 in the space 3. The metal pin 4 to be used for sealing the charge mouth 2 has to be provisionally set in the charge mouth 2 before the charge mouth 2 is surrounded by the space 3. In the provisional setting condition, the smaller top plane 4b is positioned in the charge mouth 2 and the other end portion of the groove 4a on the side plane is positioned out of the charge mouth, as shown in Fig.1(b). In this position gas can flow into the vessel via the groove 4a. After charging the oxygen gas the metal pin 4 is then pushed in the space 3 to a position where the groove 4a is located in the charge mouth 2 as shown in Fig.1(c), and this closes the charge mouth 2.

In this case, because the highly pressurized oxygen gas is smoothly charged into the vessel via the groove 4a and sealing is achieved easily by only a pushing process, it can be carried out in the limited space 3 surrounding the charge mouth 2. Further, a well sealed condition can be maintained after sealing by deformation of the metal pin 4 and the inside wall of the charging mouth 2.

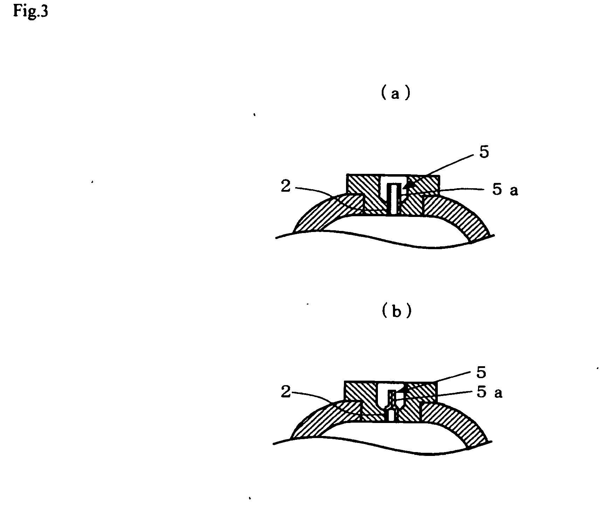

For sealing the charge mouth 2, other techniques also can be used and for example, a metal pipe 5 as shown in Fig. 3 may be applied. Fig. 3 shows an enlarged charge mouth sealed by the metal pipe. Fig.3(a) is a front section that shows the condition of the charge mouth before sealing, and Fig.3(b) is a front section that shows the condition of the charge mouth just after sealing.

In order to be used for sealing the charge mouth 2, this metal pipe 5 has to be inserted into the charge mouth 2 before the charge mouth 2 is surrounded by the space 3. During this insertion, the metal pipe 5 is inserted to a position wherein an end portion 5a of the metal pipe 5 protrudes from the charge mouth 2 as shown in Fig. 3(a). To prevent a leakage through a space between the metal pipe 5 and the charge mouth 2, the metal pipe 5 and charge mouth 2 may be adhered each other by soldering or other method. Then, after charging the highly pressurized oxygen gas, an end portion 5a of the metal pipe 5 is crushed in the space 3 as shown in Fig.3(b), and the charge mouth 2 is sealed.

In this case, in the same manner as the case of the metal pin 4 previously described, because highly pressurized oxygen gas is smoothly charged into the vessel 10 via the bore of the metal pipe 5 and sealing is easily effected by crushing the end portion 5a of the metal pipe 5, this method can be carried out in the limited space 3 surrounding the charge mouth 2. Further, a well sealed condition can be maintained after sealing by deformation of the metal pin 5 and the inside wall in the charging mouth 2.

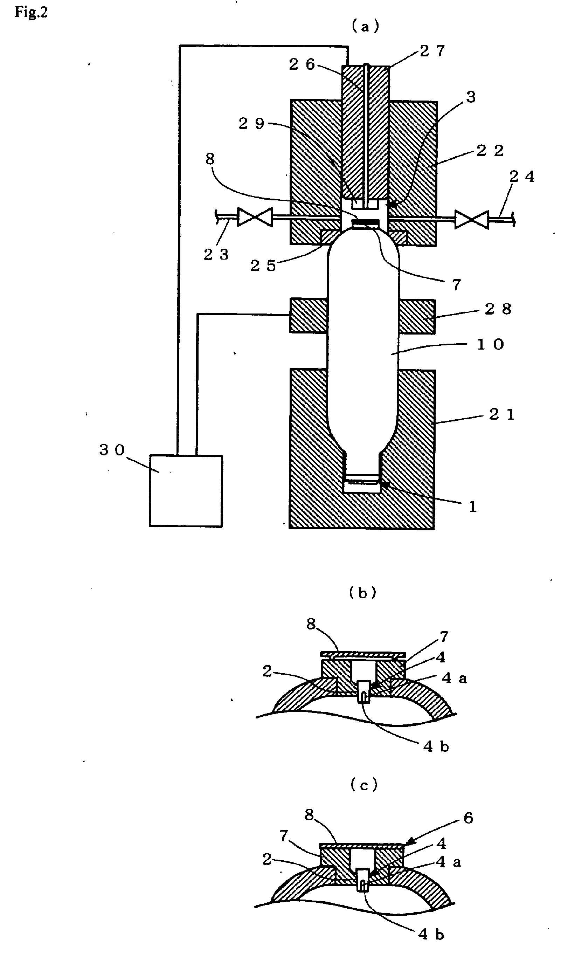

This apparatus also allows covering of the charge mouth 2 air tightly by a secondary sealing means 6. This sealing process will be described with reference to Figure 2.

In this case, the sealed condition of the charge mouth 2 can be improved.

The secondary sealing means 6 comprises an annular wall portion 7 and a sealing plate 8. The annular wall portion 7 is formed by a collar welded on a bottom portion of the vessel 10 and encircles the charge opening 2. The sealing plate 8 is welded onto a top plane of the annular wall portion 7. The secondary sealing means 6 is formed around the charge mouth 2 in steps described below by using a cylinder 27 provided to the support member 22.

Firstly, the support member 22 is removed from the vessel 10 whose charge mouth 2 is sealed. Before removal, because the space 3 is filled with the highly pressurized oxygen gas, it is preferable from a safety viewpoint to decrease the inside pressure of the space 3 via the drawing passage 23.

The support member 22 is removed while the sealing plate 8 is set on the annular wall portion 7, and then the support member 22 is again pressed onto the vessel 10 after setting the sealing plate 8. A bottom side electrode 28 is fixed to an outer circumference of the vessel 10. The bottom side electrode may be fixed there at the starting condition as shown in Fig. 1(a).

A topside electrode 29, is fixed to cylinder 27. Next, the cylinder 27 is moved toward the vessel 10 and the topside electrode 29 fixed to a front end portion of the cylinder 27 is pressed onto the sealing plate 8. Then the sealing plate 8 is welded by projection welding using a welding machine 30, and the secondary sealing means 6 air tightly surrounding the charge mouth 2 is formed.

The secondary sealing means 6 may be formed by another structure as long as it can cover the charge mouth 2 air tightly. For example, it may be made by soldering the sealing plate 8 onto the annular wall portion 7, screwing a threaded plug or a coupling cap nut instead of the sealing plate 8 to the annular wall portion 7 and so on. In any case, the structure is made up with the annular wall portion 7 that encircles the charge mouth 2 and the closure member for the annular wall portion 7. In this way, the charge mouth 2 can be covered air tightly by easy processes without affecting the sealing operation of the charging mouth 2. Depending on the structure of the charge mouth 2, the sealing plate 8 may be welded or soldered directly to the charge mouth 2 without providing the annular wall portion 7.

In Fig. 2(a), the support member 22 is pressed onto the vessel 10 to stabilize the vessel 10, and as a result, the space 3 surrounds the charge mouth 2 on which the sealing plate 8 is set. However, because the charge mouth 2 is sealed by the metal pin 4, it is not necessary to surround the charge mouth 2 by the space 3 for the process of welding the sealing plate 8. The vessel 10 can be supported by only the vessel receiver 21 as long as the sealing plate 8 is smoothly pressed, and then the processes of sealing the charge mouth 2 by the metal pin 4 and of welding the sealing plate 8 onto the annular wall portion can be respectively achieved by different apparatuses. Further, because the discharge mouth 1 can be sealed by normal welding, the method can be enhanced by existing charging apparatus and existing resistance welding apparatus without new equipment and it is also one of the advantages of the method. Furthermore, in the case where the charge mouth 2 is surrounded by the space 3 during the welding process, it is another advantage that the welding quality can be improved by filling the inside space 3 with an inert gas atmosphere.

The discharge mouth 1 is sealed by a safety sealing plate welded thereon.

In this case, sealing the discharge mouth 1 in an openable state can be easily enhanced and a well sealed condition can be maintained after sealing. The safety sealing plate disclosed in Japanese Patent publication S63-34360 is preferably used for this purpose.

An advantage of the present methods is that the charge mouth does not have to be sealed in an openable state as long as the discharge mouth is sealed in an openable state because a discharge mouth and charge mouth are provided. Further, the charge mouth does not have to be sealed by a sealing plate, and many kinds of sealing techniques become available. Therefore, by selecting proper techniques to obtain a well sealed condition, which techniques can be carried out in the limited space under the combustion-supportable or flammable gas atmosphere, it is possible to seal a vessel charged with the highly pressurized combustion-supportable or flammable gas without a complex interlock system and further possible to maintain a well sealed condition after sealing. Furthermore, because the discharge mouth is independent from the charge mouth and is sealed separately without limitation of condition in which the sealing operation is carried out, by selecting proper sealing techniques (for example, a technique of welding a known safety sealing plate), sealing it in an easily openable state can be easily effected and a well sealed condition can be maintained after sealing.

As to the technique for sealing the charge mouth, it is preferable to apply a metal pin in the form of a truncated cone having a groove extending on a side plane to a smaller top plane. According to this technique, because a highly pressurized gas is smoothly charged into the vessel via the groove and sealing is effected easily by only a pushing process, it can be carried out in the limited space surrounding the charge mouth. Further, a well sealed condition can be maintained after sealing by deformation of the metal pin and the inside wall of the charging mouth.

As another technique to seal the charge mouth, it is also possible to apply a metal pipe. According to this technique, because a highly pressurized gas is smoothly charged into the vessel via the bore of the metal pipe and sealing is effected easily by crushing the end portion of the metal pipe, it can be carried out in the limited space surrounding the charge mouth. Further, a well sealed condition can be maintained after sealing by deformation of the metal pipe and the inside wall in the charging mouth,

The vessel for a highly pressurized combustion-supportable or flammable gas is also provided.

Further, because the discharge mouth and the charge mouth are provided on the vessel for a highly pressurized combustion-supportable or flammable gas and are sealed separately and only the discharge mouth is sealed in an openable state, many kinds of techniques become available for sealing the charge mouth, which sealing operation has to be carried out in limited operation space. Then, by selecting proper sealing techniques (for example, a technique of using a metal pin or a metal pipe described above), it is possible to seal the vessel charged with the highly pressurized combustion-supportable or flammable gas without complex interlock systems and further possible to maintain a well sealed condition after sealing.

In case the discharge mouth is sealed by a safety sealing plate welded thereon, sealing it at openable state can be easily enhanced and, further, the well sealed condition can be maintained after sealing.

With respect to the charge mouth, where the technique of pushing the metal pin or crushing the metal pipe inserted therein is applied for sealing, a well sealed condition can be maintained after sealing by deformation of the metal pin and the inside wall of the charging mouth or the metal pipe.

Where the sealed charge mouth is covered air tightly with a secondary sealing means, the sealed condition of the charge mouth can be improved.

Further, where the secondary sealing means is made up of an annular wall portion that encircles the charge mouth and a closure member for the annular wall portion, the charge mouth can be covered air tightly by easy processes without affecting sealing operation of the charging mouth. Where the closure member for the annular wall portion is a sealing plate soldered onto a top plane of the annular wall portion, a sealing plate welded onto a top plane of the annular wall portion, a threaded plug screwed to an inner face of the annular wall portion or a coupling cap nut screwed to an outer face of the annular wall portion, existing techniques can be easily applied.

## Claims

1. A method of sealing a vessel (10) for a highly pressurized combustion-supportable or flammable gas, which vessel comprises a charge mouth and a discharge mouth, comprising the steps of:
previously sealing the discharge mouth (1) such that it is in an openable state; **characterised in that** the method further comprises the steps of:
surrounding said charge mouth (2) by an airtight space (3);
supplying a highly pressurized combustion-supportable or flammable gas
into said space (3) and said vessel (10);
and sealing said charge mouth (2) in said space (3), wherein the charge mouth (2) is sealed by inserting one of a metal pin (4) and a metal pipe (5) into said charge mouth (2) before surrounding said charge mouth (2) by said airtight space (3), and when the charge mouth is sealed by inserting the metal pin (4), which metal pin (4) is a truncated cone having a groove (4a) extending on a side plane to a smaller top plane (4b), which smaller top plane (4b) is positioned in said charge mouth (2) and another end portion of which groove (4a) on said side plane is positioned out of said charge mouth (2), the method further comprises the step of pushing said metal pin (4) in said space (3) to a position where said groove (4a) sinks into said charge mouth (2) after the highly pressurized gas has been supplied; and when the charge mouth is sealed by inserting the metal pipe (5), which metal pipe (5) is inserted such that an end portion (5a) of the metal pipe (5) protrudes from said charge mouth (2), the method further comprises the step of crushing said end portion (5a) in said space (3) after the highly pressurized gas has been supplied.

2. A method of sealing a vessel for a highly pressurized combustion-supportable or flammable gas as claimed in claim 1, wherein the charge mouth (2) is covered air tightly with a secondary sealing means (6).

3. A method of sealing a vessel for a highly pressurized combustion-supportable or flammable gas as claimed in claim 2, wherein said secondary sealing means (6) comprises an annular wall portion (7) and a sealing plate (8), which annular wall portion (7) encircles said charge opening (2) and which sealing plate (8) is soldered onto a top plane of said annular wall portion (7).

4. A method of sealing a vessel for a highly pressurized combustion-supportable or flammable gas as claimed in claim 2, wherein said secondary sealing means (6) comprises an annular wall portion (7) and a sealing plate (8), which annular wall portion (7) encircles said charge opening (2) and which sealing plate (8) is welded onto a top plane of said annular wall portion (7).

5. A method of sealing a vessel for a highly pressurized combustion-supportable or flammable gas as claimed in claim 2, wherein said secondary sealing means (6) comprises an annular wall portion (7) and a threaded plug, which annular wall portion (7) encircles said charge opening (2) and which threaded plug is screwed into an inner face of said annular wall portion (7).

6. A method of sealing a vessel for a highly pressurized combustion-supportable or flammable gas as claimed in claim 2, wherein said secondary sealing means (6) comprises an annular wall portion (7) and a coupling cap nut, which annular wall portion (7) encircles said charge opening (2) and which coupling cap nut is screwed to an outer face of said annular wall portion (7).

## Patentansprüche

1. Verfahren zur Abdichtung eines Behälters (10) für ein hochverdichtetes verbrennungsförderndes oder brennbares Gas, wobei der Behälter eine Befüllöffnung und eine Ausströmöffnung umfasst, das folgende Schritte umfasst:
zuvor Abdichten der Ausströmöffnung (1), sodass sie sich in einem öffenbaren Zustand befindet, **dadurch gekennzeichnet, dass** das Verfahren ferner die folgenden Schritte umfasst:
Umschließen der Befüllöffnung (2) durch einen luftdichten Raum (3),
Einleiten eines hochverdichteten verbrennungsfördernden oder brennbaren Gases in den Raum (3) und den Behälter (10),
und Abdichten der Befüllöffnung (2) in dem Raum (3), wobei die Befüllöffnung (2) durch Einsetzen eines Metallstifts (4) oder eines Metallrohrs (5) in die Befüllöffnung (2) abgedichtet wird, bevor die Einströmöffnung (2) durch den luftdichten Raum (3) umschlossen wird, und wenn die Befüllöffnung durch Einsetzen des Metallstifts (4) abgedichtet wird, wobei der Metallstift (4) ein Kegelstumpf mit einer Nut (4a) ist, die sich auf einer Seitenebene zu einer kleineren oberen Ebene (4b) erstreckt, wobei die kleinere obere Ebene (4b) in der Befüllöffnung (2) platziert ist und ein weiterer Endabschnitt der Nut (4a) auf der Seitenebene außerhalb der Befüllöffnung (2) platziert ist, wobei das Verfahren ferner den Schritt umfasst Drücken des Metellstifts (4) in den Raum (3) zu einer Position, an der die Nut (4a) in der Befüllöffnung (2) versinkt, nachdem das hochverdichtete Gas eingeleitet worden ist, und wenn die Befüllöffnung durch Einsetzen des Metallrohrs (5) abgedichtet wird, wobei das Metallrohr (5) so eingesetzt ist, dass ein Endabschnitt (5a) des Metallrohrs (5) aus der Befüllöffnung (2) hervorsteht, wobei das Verfahren ferner den Schritt des Zerdrückens des Endabschnitts (5a) in dem Raum (3) umfasst, nachdem das hochverdichtete Gas eingeleitet worden ist.

2. Verfahren zur Abdichtung eines Behälters für ein hochverdichtetes verbrennungsförderndes oder brennbares Gas nach Anspruch 1, wobei die Befüllöffnung (2) mit einem sekundären Dichtmittel (6) luftdicht abgedeckt wird.

3. Verfahren zur Abdichtung eines Behälters für ein hochverdichtetes verbrennungsförderndes oder brennbares Gas nach Anspruch 2, wobei das sekundäre Dichtmittel (6) einen ringförmigen Wandabschnitt (7) und eine Dichtplatte (8) umfasst, wobei der ringförmige Wandabschnitt (7) die Befüllöffnung (2) umschließt und wobei die Dichtplatte (8) auf eine obere Ebene des ringförmigen Wandabschnitts (7) gelötet wird.

4. Verfahren zur Abdichtung eines Behälters für ein hochverdichtetes verbrennungsförderndes oder brennbares Gas nach Anspruch 2, wobei das sekundäre Dichtmittel (6) einen ringförmigen Wandabschnitt (7) und eine Dichtplatte (8) umfasst, wobei der ringförmige Wandabschnitt (7) die Befüllöffnung (2) umschließt und wobei die Dichtplatte (8) auf eine obere Ebene des ringförmigen Wandabschnitts (7) geschweißt wird.

5. Verfahren zur Abdichtung eines Behälters für ein hochverdichtetes verbrennungsförderndes oder brennbares Gas nach Anspruch 2, wobei das sekundäre Dichtmittel (6) einen ringförmigen Wandabschnitt (7) und einen Gewindestopfen umfasst, wobei der ringförmige Wandabschnitt (7) die Befüllöffnung (2) umschließt und wobei der Gewindestopfen in eine Innenfläche des ringförmigen Wandabschnitts (7) geschraubt wird.

6. Verfahren zur Abdichtung eines Behälters für ein hochverdichtetes verbrennungsförderndes oder brennbares Gas nach Anspruch 2, wobei das sekundäre Dichtmittel (6) einen ringförmigen Wandabschnitt (7) und eine verbindende Überwurfmutter umfasst, wobei der ringförmige Wandabschnitt (7) die Befüllöffnung (2) umschließt und wobei die Überwurfmutter an eine Außenfläche des ringförmigen Wandabschnitts (7) geschraubt wird.

## Revendications

1. Procédé de fermeture étanche d'une cuve (10) pour un gaz combustible ou inflammable à très haute pression, laquelle cuve comprend une embouchure de chargement et une embouchure de déchargement, comprenant les étapes consistant à :
fermer hermétiquement au préalable l'embouchure de déchargement (1) de sorte qu'elle soit dans un état ouvrable ; **caractérisé en ce que** le procédé comprend en outre les étapes consistant à :
entourer ladite embouchure de chargement (2) d'un espace étanche à l'air (3) ;
fournir un gaz combustible ou inflammable à très haute pression
dans ledit espace (3) et ladite cuve (là) ;
et fermer hermétiquement ladite embouchure de chargement (2) dans ledit espace (3), dans lequel l'embouchure de chargement (2) est fermée hermétiquement en insérant l'un d'une broche métallique (4) et d'un tuyau métallique (5) dans ladite embouchure de chargement (2) avant d'entourer ladite embouchure de chargement (2) dudit espace étanche à l'air (3), et, lorsque l'embouchure de chargement est fermée hermétiquement en insérant la broche métallique (4), laquelle broche métallique (4) est un cône tronqué comportant une rainure (4a) s'étendant dans un plan latéral vers un plan supérieur (4b) plus petit, lequel plan supérieur (4b) plus petit est positionné dans ladite embouchure de chargement (2) et laquelle rainure (4a) a une autre partie d'extrémité dans ledit plan latéral positionnée en dehors de ladite embouchure de chargement (2), le procédé comprend en outre l'étape consistant à pousser ladite broche métallique (4) dans ledit espace (3) à une position à laquelle ladite rainure (4a) s'enfonce entièrement dans ladite embouchure de chargement (2) après que le gaz à très haute pression a été délivré ; et lorsque l'embouchure de chargement est fermée hermétiquement en insérant le tuyau métallique (5), lequel tuyau métallique (5) est inséré de sorte qu'une partie d'extrémité (5a) du tuyau métallique (5) dépasse de ladite embouchure de chargement (2), le procédé comprend en outre l'étape d'écrasement de ladite partie d'extrémité (5a) dans ledit espace (3) après que le gaz à très haute pression a été délivré.

2. Procédé de fermeture étanche d'une cuve pour un gaz combustible ou inflammable à très haute pression selon la revendication 1, dans lequel l'embouchure de chargement (2) est recouverte de manière étanche à l'air de moyens d'étanchéité secondaires (6).

3. Procédé de fermeture étanche d'une cuve pour un gaz combustible ou inflammable à très haute pression selon la revendication 2, dans lequel lesdits moyens d'étanchéité secondaires (6) comprennent une partie de paroi annulaire (7) et une plaque d'étanchéité (8), laquelle partie de paroi annulaire (7) encercle ladite ouverture de chargement (2) et laquelle plaque d'étanchéité (8) est soudée dans un plan supérieur de ladite partie de paroi annulaire (7).

4. Procédé de fermeture étanche d'une cuve pour un gaz combustible ou inflammable à très haute pression selon la revendication 2, dans lequel lesdits moyens d'étanchéité secondaires (6) comprennent une partie de paroi annulaire (7) et une plaque d'étanchéité (8), laquelle partie de paroi annulaire (7) encercle ladite ouverture de chargement (2) et laquelle plaque d'étanchéité (8) est soudée dans un plan supérieur de ladite partie de paroi annulaire (7).

5. Procédé de fermeture étanche d'une cuve pour un gaz combustible ou inflammable à très haute pression selon la revendication 2, dans lequel lesdits moyens d'étanchéité secondaires (6) comprennent une partie de paroi annulaire (7) et un bouchon fileté, laquelle partie de paroi annulaire (7) encercle ladite ouverture de chargement (2) et lequel bouchon fileté est vissé dans une face intérieure de ladite partie de paroi annulaire (7).

6. Procédé de fermeture étanche d'une cuve pour un gaz combustible ou inflammable à très haute pression selon la revendication 2, dans lequel lesdits moyens d'étanchéité secondaires (6) comprennent une partie de paroi annulaire (7) et un écrou de capuchon d'accouplement, laquelle partie de paroi annulaire (7) encercle ladite ouverture de chargement (2) et lequel écrou ce capuchon d'accouplement est vissé sur une face extérieure de ladite partie de paroi annulaire (7).
